Europäisches Patentamt

European Patent Office

Office européen des brevets

(19)

(11) Publication number : **0 479 747 A1**

## (12) EUROPEAN PATENT APPLICATION

(21) Application number : **91850232.9**

(22) Date of filing : **26.09.91**

(51) Int. Cl.⁵ : **E02F 3/42**

(30) Priority : **01.10.90 SE 9003129**

(43) Date of publication of application :
**08.04.92 Bulletin 92/15**

(84) Designated Contracting States :
**AT BE CH DE DK ES FR GB GR IT LI LU NL**

(71) Applicant : **Norgren, Rune**
**Maskingatan 1**
**S-902 54 Umea (SE)**

(72) Inventor : **Norgren, Rune**
**Maskingatan 1**
**S-902 54 Umea (SE)**

(74) Representative : **Onn, Thorsten et al**
**AB STOCKHOLMS PATENTBYRA, Zacco &**
**Bruhn, Box 23101**
**S-104 35 Stockholm (SE)**

(54) **An implement attachment means for mechanical diggers.**

(57)   An implement attachment means for fitting to a digging machine, particularly a deep digging machine includes, in a known manner, a working yoke (2) which is pivotally mounted on the implement-carrying arm (1) of the machine and which can be rotated in a plane lying in the implement-carrying arm (1) by means of a working piston-cylinder device (3). The implement attachment means includes a first link (4) and a second link (5) which is spaced from the first link. The first link has the form of a pivot which is moveable at least in two substantially perpendicular directions (7 and 8) and is connected to the implement-carrying arm (1), and the second link has the form of a working arm (12) and a reciprocatingly moveable force generator (13). The working arm (12) and the force generator (13) lie in a plane which is substantially perpendicular to the rotational plane of the working yoke (2) and are pivotally connected to the working yoke (2).

FIG.3

Jouve, 18, rue Saint-Denis, 75001 PARIS

The present invention relates to an implement attachment for ground preparing machines, in particular for mechanical shovels or diggers, in accordance with the preamble of Claim 1.

Known to the art is an implement attachment means in the form of a combined rotator and pivot device for mechanical shovels or diggers, a so-called "rotor-tilt", for instance from Swedish Patent Specification No.8304898-3. This attachment means includes both means for swinging-tilting the bucket or shovel and also for rotating the same. The known attachment means is mounted on the implement-carrying arm of the mechanical digger and its working arm in a conventional manner. Due to the particular construction of this implement attachment means which incorporates the aforesaid rotor and tilting functions, a considerable constructional height is required between the point at which it is mounted on the implement-carrying arm and the bucket. In addition, the complexibility of the implement attachment means results in a weight increase. Both of these properties of the known implement attachment means impair the balance of the machine and result in a longer lever arm between bucket and said mounting point, which in turn results in reduced ground breaking or penetrating power, the end result being a smaller bucket volume than is otherwise possible. As before-mentioned, the known implement attachment means has a complex construction and is therewith also expensive. Other implement attachment means of this kind are known to the art, and a common feature of all these known attachment means is that the rotor and tilting mechanism are incorporated in said attachment in the form of a unit which is intended to be mounted on the implement-carrying arm and working arm of the mechanical digger, resulting in the aforesaid drawbacks.

The present invention relates to an implement attachment means for tilting movement, which can be used with all types of implements and which, combined with a so-called "rotor-tilt" results in small structural measurements, meaning in practice that the aforesaid lever arm is reduced by about 600 mm as compared with a standard machine, while at the same time achieving a considerable weight reduction. In this way, the bucket volume and ground breaking power are the same as those of a bucket which is attached directly to the implement-carrying arm and working arm of the mechanical digger. This improvement has been made possible by means of the present invention which has the characteristic features set forth in the following Claims.

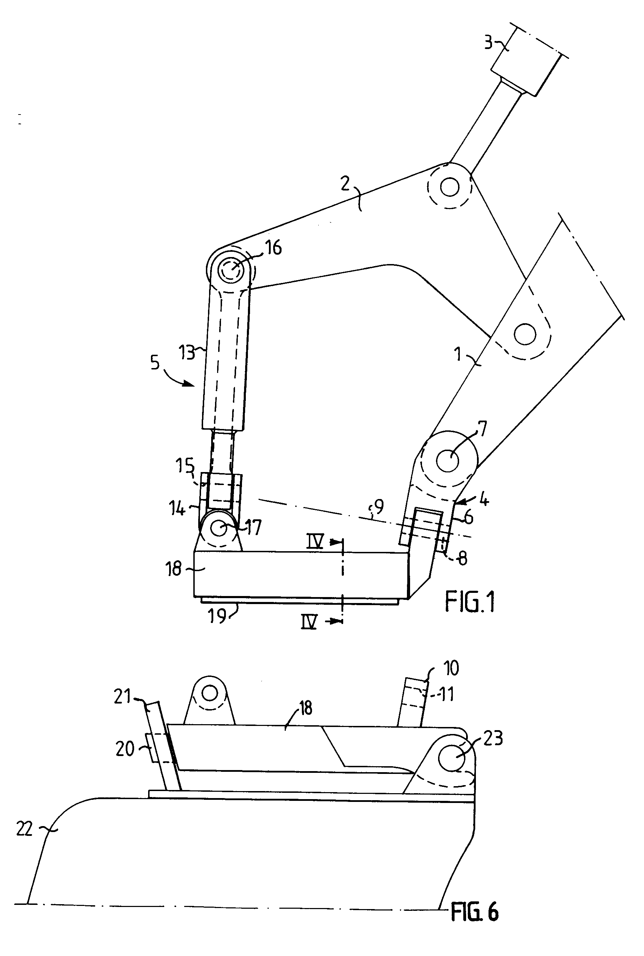

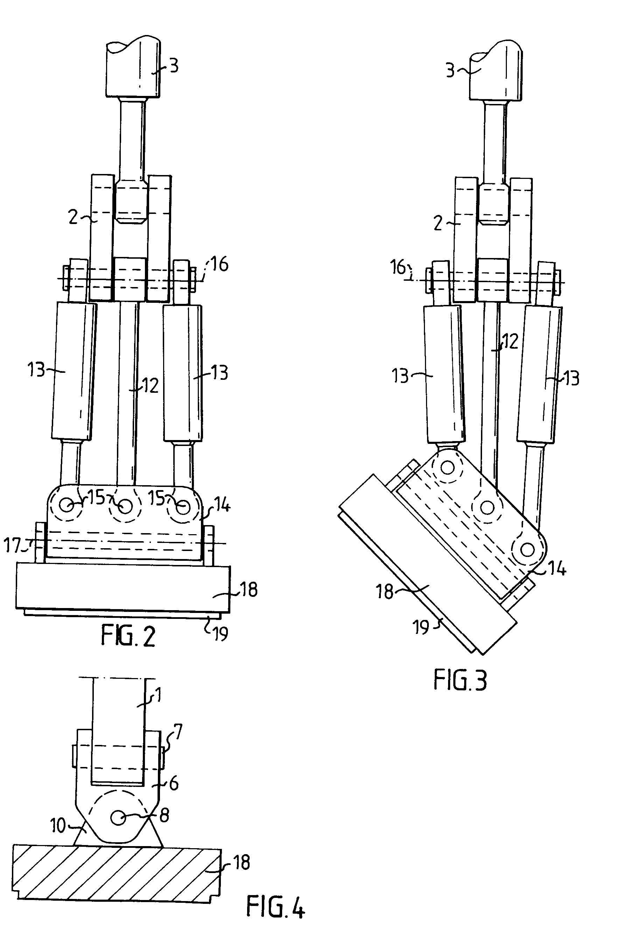

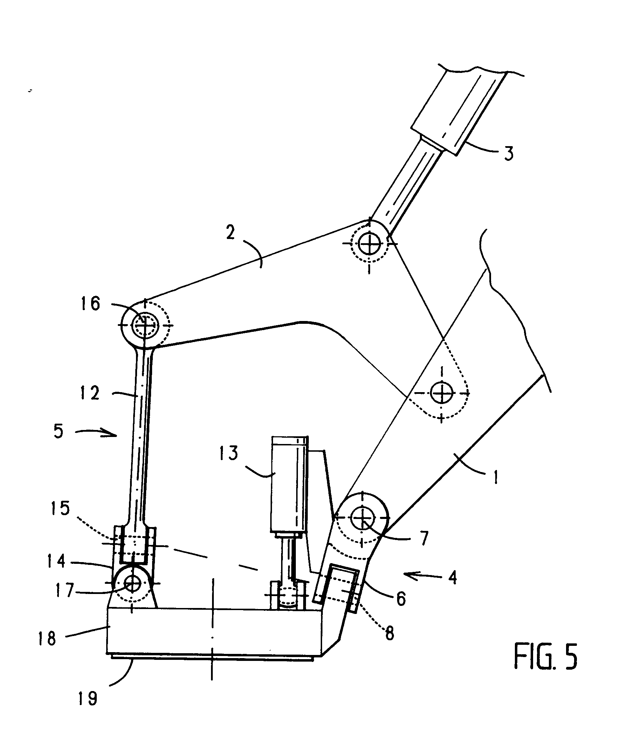

The invention will now be described in more detail with reference to an exemplifying embodiment thereof and also with reference to the accompanying drawings, in which Figure 1 illustrates schematically the invention combined with a rotator; Figures 2 and 3 are front views of the invention shown in two different positions; Figure 4 illustrates schematically the implement attachment means mounted on the implement-carrying arm, as seen on the line IV-IV in Figure 1; Figure 5 illustrates an alternative embodiment of the invention; and Figure 6 illustrates schematically a method of combining the inventive attachment means directly with, for instance, an excavating bucket or shovel.

The mechanical digger to which the following description of the invention refers by way of example and which is not shown in its entirety since the digger forms part of the known prior art, has an implement-carrying arm 1 and a working yoke 2 pivotally mounted thereon. As illustrated in Figure 1, a working piston-cylinder device 3 functions to rotate the yoke in a plane which lies in the implement-carrying arm 1.

The inventive implement attachment means includes a first link 4 and a second link 5 which is spaced from the first link. The first link 4 has essentially the form of a forked bracket 6 which is pivotally mounted on the end of the implement-carrying arm 1 by means of a pivot 7. The other end of the bracket is secured to a lug 10 by means of a pivot pin 8 which extends through a bore 11 provided in said lug, said lug 10 being connected, either directly or indirectly, to the implement to be attached to the mechanical digger, and said pivot pin extending perpendicularly to the axis of the pivot 7. See also Figure 5. The link 4 will thus function as a universal joint between the implement-carrying arm 1 and the implement.

In the case of the illustrated embodiment, the second link comprises a working arm 12 and a force generator which has the form of a hydraulically operated piston-cylinder device 13 on each side of the working arm 12. The working arm 12 and the hydraulic piston-cylinder devices 13 are pivotally connected to the free end of the yoke 2, as illustrated in Figures 1-3. The working arm 12 and the hydraulic piston-cylinder devices 13 are preferably pivotally mounted to the yoke 2 by means of part-spherical bearings, so as to permit limited movement in the plane of the paper (Figures 2 and 3). The second link 5 is pivotable in a plane parallel with the plane of rotation of the yoke 2. The ends of the working arm 12 and the hydraulic piston-cylinder devices 13 remote from the yoke 2 are pivotally connected to a connector 14 which, to this end, is provided with three uniformly spaced bores 15. The axes of the bores 15 extend perpendicularly to the pivot axis 16 of the link 5 on the yoke 2. The connector 14 is intended to be mounted, either directly or indirectly, to the implement so as to be pivotal in the rotational plane of the yoke around a pivot axle 17.

Figures 1-4 show the lug 10 and the connector 14 mounted on a coupling device 18 in the form of a rotator to which the implement to be used, e.g. a bucket, is attached. The rotator may be of known construction, comprising a worm gear driven by a hydraulic motor, wherein the implement is attached to the part 19 which is rotatable relative to the implement attachment means and which is driven by the worm wheel of the worm gear. This enables the implement to be rotated as desired, in a known manner. The inventive arrangement of the first and the second links 4 and 5 enable the implement, attached to the coupling device 18, to be also tilted with the aid of the hydraulic piston-cylinder devices 13. This is shown in Figure 3.

Figure 5 illustrates the principles of an alternative embodiment of the invention, wherein two force generators in the form of two hydraulically operated piston-cylinder devices 13 are connected to the first link 4, more specifically to the forked bracket 6, as shown in the Figure, such as to fulfil the same function as the force generators 13 illustrated in Figure 1 and replace these latter generators. In this case, the second link 5 consists solely of the working arm 12. It will be understood that the piston-cylinder devices 13 must be spaced apart so as not to present an obstacle to movement of the yoke 2 and so that said yoke is able to move freely between the piston-cylinder devices.

In the embodiment illustrated in Figure 6, the rotator is replaced with a coupling device 18 in the form of a unit attachment to which different implements can readily be connected in a known manner, by manually or hydraulically manoeuvring a locking wedge or key 20 which engages a tongue 21 mounted on the implement 22, in this case a bucket. The other end of the coupling device 18 has a fork-shaped part which engages a shaft 23 mounted on the implement. It will be understood that other embodiments of the inventon are conceivable within the scope of the invention. For example, it is possible to use only one hydraulic piston-cylinder device 13 which coacts with the working arm 12 in a manner to achieve the desired result. This embodiment, however, has a smaller capacity than an embodiment in which two hydraulic piston-cylinder devices 13 are used. It is also possible within the scope of the present invention to omit the working arm 12 and to use solely the two hydraulic piston-cylinders 13, although more powerful piston-cylinder devices are required in this case together with extremely precise and co-ordinated or mutual movement patterns, since the two hydraulic piston-devices shall be capable of absorbing the digging forces, while, at the same time, the piston of one of said devices must be capable of moving outwardly through precisely the same distance as the piston of the other hydraulic piston-cylinder device moves inwards.

It is stated in the aforegoing that the lug 10 and the connector 14 can be mounted, either directly or indirectly, to the implement, e.g. a digging bucket. By this is meant that instead of being mounted to a coupling device 18 (rotator or unit attachment), the lug and the connector may instead be mounted directly to the implement, in this case the bucket 22. The illustrated pivot shaft may, of course, be replaced with ball bearings and the term "force generator" used in the aforegoing refers to any type of machine element suitable for the purpose described.

## Claims

1. An implement attachment means for fitting to a ground preparing machine, particularly a deep digging machine, comprising an implement-carrying arm (1), a working yoke (2) which is pivotally mounted on the implement-carrying arm (1) and which can be rotated by means of a working piston-cylinder device (3) in a plane which lies in the implement-carrying arm (1), **characterized** in that the implement attachment means includes a first link (4) and a second link (5) spaced from said first link, in that the first link (4) has the form of a pivot which is moveable at least in two substantially perpendicular directions (7 and 8) and is connected to the implement-carrying arm (1) and the second link (5) is pivotally connected to the working yoke (2); and in that one of the links includes a reciprocatingly moveable force generator (13) which is active in a plane that deviates from the rotational plane of the working yoke (2).

2. An attachment means according to Claim 1, **characterized** in that the second link includes a working arm (12) which with the force generator (13) lies in a plane substantially perpendicular to the rotational plane of the working yoke (2).

3. An attachment means according to Claim 2, **characterized** in that the force generator comprises two piston-cylinder devices (13) mounted on a respective side of the working arm (12).

4. An attachment means according to Claim 1, 2 or 3, **characterized** in that the second link (5) is provided with a shaft (17) which is intended for connection with the implement and which lies in the plane which contains the working arm (12) and the force generator (13); in that a connector (14) is mounted for pivotal movement around the shaft (17); and in that the working arm (12) and the force generator (13) are pivotally mounted to the connector (14) for pivotal movement in a plane perpendicular to the shaft (17).

5. An attachment means according to any one of the preceding Claims, **characterized** by a lug (10) for connection to the implement, said lug having a bore (11) whose axis (9) lies in the rotational plane of the working yoke (2), said first link (4) being pivotally mounted in the bore (11); and in that the link is pivotally mounted on the implement-carrying arm (1) on a shaft (7) for pivotal movement perpendicularly to the rotational plane of the working yoke (2).

6. An attachment means according to Claim 5, **characterized** in that the geometric extension of the axis (9) of the bore (11) essentially intersects the pivot point of the working arm (12) in the connector (14).

7. An attachment means according to Claim 5 or 6, **characterized** in that the shaft (17) of the second link (5) and the lug (10) are connected to a common coupling device (19) to which the implement shall be attached.

8. An attachment means according to Claim 7, **characterized** in that the coupling device (18) is provided with quick-coupling means for the attachment of said implement.

9. An attachment means according to Claim 7 or 8, **characterized** in that the coupling device (18) is constructed as a rotator for rotation of the implement in relation to the links (4 and 5), and therewith the excavating machine.

FIG.1

FIG. 6

FIG. 2

FIG.3

FIG.4

FIG. 5

**European Patent Office**

## EUROPEAN SEARCH REPORT

Application Number

EP 91 85 0232

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 343 693 (C.P. BECKER) | 1-7,9 | E02F3/42 |
| Y | * column 8, line 43 - column 9, line 63 * | 8 | |
| | * figures 14,15 * | | |
| | --- | | |
| Y | DE-A-3 018 831 (WAIN-ROY INC.) | 8 | |
| A | * page 20, paragraph 2 - page 22, paragraph 1 * | 1 | |
| | * figures 7,8 * | | |
| | ----- | | |
| | | | **TECHNICAL FIELDS SEARCHED (Int. Cl.5)** |
| | | | E02F |
| | | | B66C |

The present search report has been drawn up for all claims

| Place of search | Date of completion of the search | Examiner |
|---|---|---|
| THE HAGUE | 04 DECEMBER 1991 | ESTRELA Y CALPE J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)